# EUROPEAN PATENT SPECIFICATION

(11) **EP 0 500 673 B1**
(45) Date of publication and mention of the grant of the patent: **11.01.1995**
(21) Application number: 90916834.6
(22) Date of filing: 06.11.1990
(51) Int. Cl.: A23C 15/16

(54) **EDIBLE-FAT PRODUCT WITH LOW FAT CONTENT, AND METHOD FOR THE PRODUCTION THEREOF**
ESSBARES FETTPRODUKT MIT NIEDRIGEM FETTGEHALT SOWIE DESSEN HERSTELLUNGSVERFAHREN
PRODUIT DE MATIERE GRASSE COMESTIBLE A FAIBLE TENEUR EN MATIERE GRASSE, ET SON PROCEDE DE PRODUCTION

(30) Priority: 07.11.1989 SE 8903714
(43) Date of publication of application: 02.09.1992
(73) Proprietor: SKANEMEJERIER EKONOMISK FÖRENING, S-213 01 Malmö (SE)
(72) Inventor: LÖFGREN, Richard, S-211 49 Malmö (SE); GUSTAFSSON, Mats, S-273 96 Tomelilla (SE)
(74) Representative: Wiklund, Ingrid Helena
(86) International application number: SE9000717
(87) International publication number: WO9106220

(56) References cited:
- FI-B- 75 977
- US-A- 2 461 117
- US-A- 4 209 546
- Patent abstracts of Japan, vol 11, no. 193, C430, abstract of JP 62-19049, publ. 1987-01-27 Snow Brand Milk Prod Co Ltd

## Description

The present invention relates to an edible-fat product with low fat content based on milk fat, and a method for the production thereof.

For reasons of health, there is a great demand for edible-fat products with low fat content, and a good many edible-fat products marketed today do indeed have a fat content of 60% or less. However, these products contain various additives, such as emulsifying and stabilising agents, for promoting the formation and stabilisation of a water-in-oil emulsion. Since it is desirable to have as few additives as possible in food, this is a serious disadvantage.

Margarines with low fat content are produced by mixing a fatty phase and an aqueous phase at a temperature at which the fat is in liquid state. Emulsifying and stabilising agents are added to the mixture, and the fatty phase and the aqueous phase are emulsified. Then, the emulsion is cooled, and the fat is allowed to crystallise.

Conventionally, butter is made from pasteurised cream, to which a starter culture may have been added. Before the cream is churned, it is matured for 12-15 h. The churning results in a by-product, buttermilk, with a fat content of about 0.6%, which, in view of the large amounts of milk used, represents a significant loss of milk fat.

In today's market, there are various fat products consisting of mixtures of milk fat and vegetable fat. Also these products are produced by conventional buttermaking technique, with an ensuing loss of fat amounting to about 1.2% of the total fat content in the mixture of cream and vegetable oil that is churned, meaning that the loss of fat is even higher than in the production of butter.

In an attempt at avoiding the losses of fat that inevitably occur in the production of edible fat by churning methods, Alfa Laval Food Engineering AB has developed a method for producing a fat product based on milk fat, which does not comprise conventional churning (SE Patent Application 8801743-9). In this method, cream is concentrated to 60-85%, whereupon it is cooled for a long time, so that the milk fat begins to crystallise. Vegetable oil is admixed to the cooled, concentrated cream, and a phase reversal is brought about by gentle stirring. Thus, this method is advantageous in that it does not involve any losses of fat, but, on the other hand, the resultant end product still has a very high fat content.

An inconvenience in the production of an edible-fat product with lower fat content is that the lower the fat content, the more difficult the phase reversal, i.e. the transformation from an oil-in-water emulsion to a water-in-oil emulsion. Further, it is difficult to cause the fat to crystallise in such a manner that the product becomes soft and easy-to-spread simultaneously as the emulsion remains stable.

One object of the invention is to provide an edible-fat product with low fat content, preferably 40-70% by weight of fat, based on milk fat without any additives. This product should be not only easily spreadable, but also suitable for frying and baking.

Another object of the invention is to provide a method for the production of an edible-fat product with low fat content based on milk fat.

The inventive edible-fat product contains 40-70% by weight of fat and has been produced from milk or cream with a fat content of 30-50% by weight, which has been concentrated to a fat content of 40-60% by weight at a temperature of 50-70°C; thermally treated by cooling to 6-10°C, heating to 16-21°C, and further cooling to 12-13°C, such that crystallisation of the milk fat begins; stored; mixed with 0-50% by weight of vegetable oil, as based on the amount of fat in the prepared product; and processed under cooling to bring about phase reversal and good water distribution.

The invention also concerns a method for the production of an edible-fat product with low fat content based on milk fat, this method being characterised in that a milk product consisting of milk or cream with a fat content of 30-50% by weight is concentrated to a fat content of 40-60% by weight at a temperature of 50-70°C, whereupon it is thermally treated by cooling to 6-10°C, heating to 16-21°C, and further cooling to 12-13°C, such that crystallisation of the milk fat begins. After storing, the product is mixed with 0-50% by weight of vegetable oil, as based on the amount of fat in the prepared product. Finally, the product is processed under cooling to bring about phase reversal and good water distribution.

This method is suitably carried out in a plant comprising a device for concentrating the milk product; a jacketed tank for thermal treatment of the concentrated product at 6-10°C, 16-21°C, and 12-13°C; a storage tank which may be identical with the tank for thermal treatment; optionally a device for supplying vegetable oil; and a phase reversal device for cooling and processing the product.

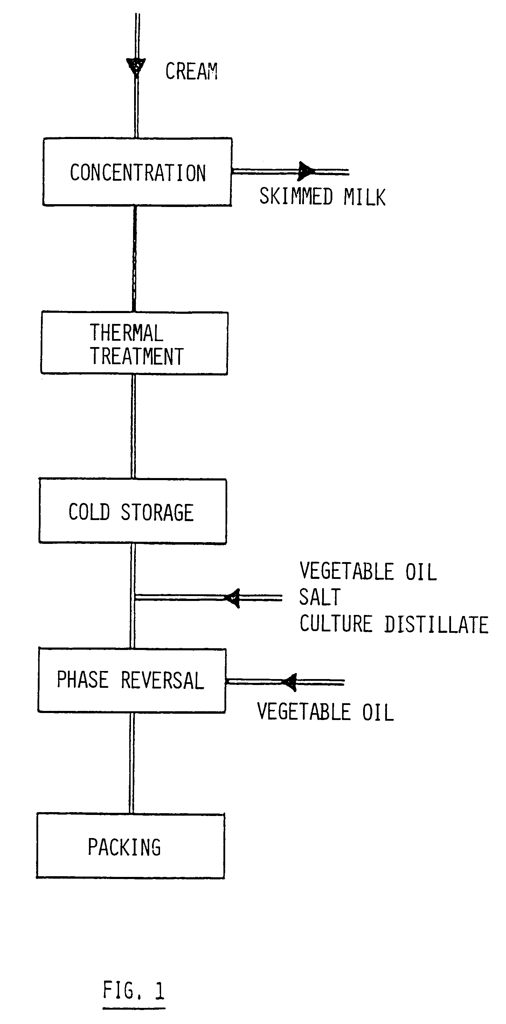

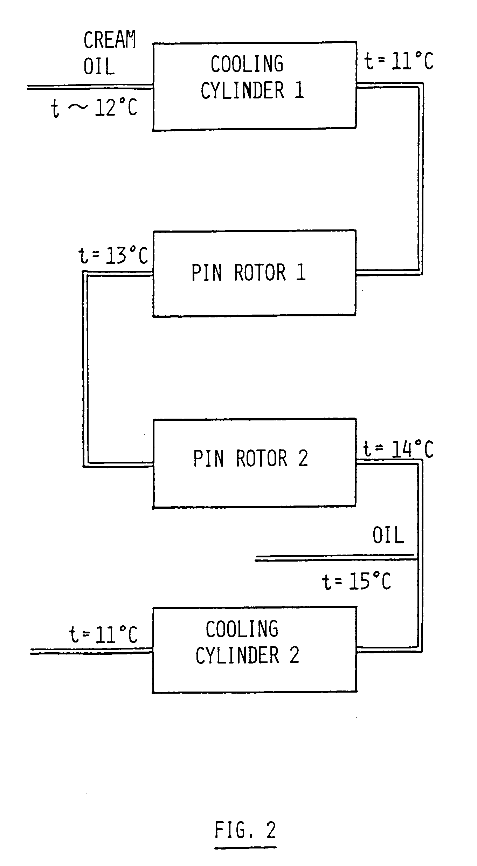

The invention will be desribed in more detail below with reference to the accompanying drawings, in which Fig. 1 is a flow chart illustrating the production of an edible-fat product containing milk fat and vegetable oil, and Fig. 2 is a schematic illustration of the process conditions during phase reversal.

Milk or cream with a fat content of 30-50% is highly pasteurised at a temperature of 80-115°C. Then, it is concentrated to a fat content of 40-60%, preferably 45-58%. This operation is carried out in a centrifugal separator at a temperature of 50-70°C. The concentrated milk product is cooled to a temperature of 6-10°C, either directly in a jacketed tank, or in a tubular heat exchanger or plate heat exchanger. The product is maintained at this temperature for 1-2 h. Then, it is heated in a jacketed tank (if the preceding cooling was carried out in a jacketed tank, the same tank is used here) with water of 27°C in the jacket to 16-21°C, at which temperature the fat is allowed to crystallise for 5-8 h. Finally, the product is cooled once more to 12-13°C, at which temperature it is stored for 10-15 h, suitably in the same jacketed tank.

If so desired, vegetable oil may be added to the milk or cream in an amount of up to 50% by weight, as based on the amount of fat in the prepared product. An unhardened vegetable oil is used which can either be pumped directly into conduits to the phase reversal device or be admixed to the concentrated milk product in a mixing tank. The vegetable oil is advantageously added in two steps. Preferably, 70-90% by weight of the vegetable oil is added in the first step, and 30-10% by weight thereof is added in the second step.

Although soybean oil is the vegetable oil most frequently used, also other oils, such as rape oil, turnip rape oil and sunflower oil, may be used.

Also a starter culture distillate is preferably added, which bestows on the prepared product the quality of bacteriologically acidulated butter.

After the storing and optional admixing of vegetable oil, the product is pumped further for the bringing about of the phase reversal, i.e. the transformation of the oil-in-water emulsion to a water-in-oil emulsion. This phase reversal is achieved by conducting the mixture of concentrated milk product and vegetable oil, if any, through a unit comprising tubular scraped surface coolers and crystallisers of the type used in the production of margarine.

During phase reversal and cooling, the crystallisation of the fat in the milk product, or the mixture of milk product and vegetable oil, is slowly followed through. The cooling is adapted to the crystallisation in such a manner that the temperature of the mixture is not affected by any released crystallisation heat.

The presently preferred unit for achieving phase reversal is shown in Fig. 2. The unit comprises a first cooling cylinder, a first and a second pin rotor, and a second cooling cylinder, all connected in series.

After cold storage, the main part (70-90% by weight) of the vegetable oil is admixed to the concentrated milk product, and the mixture is passed through the first cooling cylinder in which the temperature is lowered to 10-11°C. Then, it is passed through a first and a second pin rotor. The number of revolutions of the pin rotors and the cooling cylinders are adjusted such that the water is uniformly distributed in the fatty phase. When the product has passed the second pin rotor, the remaining oil (30-10% by weight) is admixed, whereupon the product is passed through the second cooling cylinder.

It is advantageous to add the oil in two steps because the resultant product then becomes softer and the oil is maximally utilised. If all the oil is added at once, oil drops may remain in the aqueous phase.

When the product has passed the device for phase reversal, it is preferably passed through a "holding tube", in which aftercrystallisation may occur. Then, the product is packed.

With the inventive method, it is possible to prepare products of varying fat composition. Examples of such products are shown in the Table below.

| Ratio of vegetable oil to total amount of fat % by weight | Fat content in the cream % by weight | Ratio of vegetable oil to cream % by weight |
|---|---|---|
| 15 | 56.0 | 9/91 |
| 20 | 54.5 | 12/88 |
| 25 | 52.9 | 15/85 |
| 30 | 51.2 | 18/82 |
| 35 | 49.4 | 21/79 |
| 40 | 47.4 | 24/76 |
| 45 | 45.2 | 27/73 |
| 50 | 42.9 | 30/70 |

In all these cases, the end product has a fat content of about 60% by weight.

How far the concentration of the milk product is to be taken in the first step depends on how much vegetable fat the end product should contain. If a low content of vegetable fat is desired, the milk product is concentrated further than for a high amount of vegetable oil.

If no vegetable fat is to be added, the milk product is directly concentrated to the fat content desired for the end product, and is then processed, in the manner described above, in the phase reversal device after the thermal treatment.

The invention will be further illustrated by the following Example.

### Example

### Recipe

80.7% by weight of cream (52% fat)
18.0% by weight of soybean oil
1.2% by weight of salt
0.1% by weight of starter culture distillate
The following operations were carried out in a pilot plant.

Cream with a fat content of 35-40% was highly pasteurised at a temperature of 80-115°C, whereupon it was concentrated in a centrifugal separator at a temperature of 55-60°C to a fat content of 52% by weight. Then, the concentrated cream was thermally treated so as to attain a suitable degree of crystallisation. First, the cream was cooled to 8-10°C and stored in a jacketed tank for about 2 h. Then, it was heated to 18-22°C by water with a temperature of 27°C being circulated in the jacket of the tank. This temperature was maintained for 4-5 h. Finally, the cream was cooled to 12-13°C and maintained at this temperature for 10-12 h.

After the thermal treatment, 85% of the soybean oil, the salt and the starter culture distillate were added. Phase reversal was begun by cooling the mixture to 10-11°C in a cooling cylinder rotating at a speed of 800-1100 rpm. Then, the mixure was processed in a pin rotor at a speed of 100-200 rpm, and the temperature rose to 13°C. Subsequently, the mixture was passed through a second pin rotor, also rotating at a speed of 100-200 rpm, and the temperature rose further to 14-17°C. After this treatment, the remaining 15% of the oil was admixed, and the mixture was passed through a cooling cylinder rotating at a speed of 600-1000 rpm, the mixture being cooled to 10-11°C. After the product had passed the second cooling cylinder, it was conducted through a "holding tube" to make the crystallisation complete. After this tube, the product had a temperature of 13-14°C. Finally, the finished product was packed.

The resultant product had the following composition:

| | |
|---|---|
| milk fat | 42.0% |
| vegetable fat | 18.0% |
| water | 35.5% |
| protein | 1.1% |
| salt | 1.2% |
| balance | 2.2% |

## Claims

1. A method for the production of an edible-fat product with low fat content based on milk fat, **characterised** in that a milk product consisting of milk or cream with a fat content of 30-50% by weight is
- concentrated to a fat content of 40-60% by weight at a temperature of 50-70°C,
- thermally treated by cooling to 6-10°C, heating to 16-21°C, and further cooling to 12-13°C, such that crystallisation of the milk fat begins,
- stored,
- mixed with 0-50% by weight of vegetable oil, as based on the amount of fat in the prepared product, and
- processed under cooling to bring about phase reversal and good water distribution.

2. Method as claimed in claim 1, **characterised** in that the vegetable oil is admixed to the milk product in two steps.

3. Method as claimed in claim 2, **characterised** in that 70-90% by weight of the vegetable oil is added in the first step, and 30-10% by weight thereof is added in the second step.

4. Method as claimed in one or more of claims 1-3, **characterised** in that the phase reversal is carried out at a temperature of 10-15°C, using tubular scraped surface coolers and mixers.

## Patentansprüche

1. Verfahren zur Herstellung eines Speisefettprodukts mit niedrigem Fettgehalt auf der Basis von Milchfett, **dadurch gekennzeichnet** daß ein Milchprodukt bestehend aus Milch oder Rahm mit einem Fettgehalt von 30-50 Gew.-%
auf einen Fettgehalt von 40-60 Gew.-% bei einer Temperatur von 50-70°C konzentriert wird,
thermisch durch Kühlen auf 6-10°C, Erwärmen auf 16-21°C, und weiteres Kühlen auf 12-13°C behandelt wird, so daß die Kristallisation des Milchfetts beginnt,
gelagert wird,
mit 0-50 Gew.-% pflanzlichem Öl, bezogen auf die Menge an Fest in dem hergestellten Produkt, vermischt wird, und
unter Kühlen verarbeitet wird, um eine Phasenumkehr und eine gute Wasserverteilung zu bewirken.

2. Verfahren nach Anspruch 1, **dadurch gekennzeichnet**, daß das pflanzliche Öl dem Milchprodukt in zwei Schritten zugemischt wird.

3. Verfahren nach Anspruch 2, **dadurch gekennzeichnet** daß 70-90 Gew.-% des pflanzlichen Öls in dem ersten Schritt zugegeben werden, und 30-10 Gew.-% davon in dem zweiten Schritt zugegeben werden.

4. Verfahren nach einem oder mehreren der Ansprüche 1 bis 3, **dadurch gekennzeichnet,**das die Phasenumkehr bei einer Temperatur von 10-15°C durchgeführt wird, wobei röhrenförmige Kratzkühler und Mischer verwendet werden.

## Revendications

1. Procédé de production d'un produit à matière grasse comestible ayant une teneur faible en matière grasse à base de matière grasse du lait, caractérisé en ce qu'un produit laitier constitué de lait ou de crème ayant une teneur en matière grasse de 30-50% en masse est
- concentré à une teneur en matière grasse de 40-60% en masse à une température de 50-70°C,
- traité thermiquement par un refroidissement à 6-10°C, par un chauffage à 16-21°C et par un refroidissement supplémentaire à 12-13°C, de sorte. que la cristallisation de la matière grasse du lait commence,
- stocké,
- mélangé avec 0-50% en masse d'huile végétale par rapport à la quantité de matière grasse dans le produit préparé et
- traité en refroidissant pour provoquer une inversion de phase et une bonne distribution de l'eau.

2. Procédé selon la revendication 1, caractérisé en ce qu'on mélange l'huile végétale au produit laitier en deux étapes.

3. Procédé selon la revendication 2, caractérisé en ce qu'on ajoute de 70 à 90% en masse de l'huile végétale dans la première étape et de 30 à 10% en masse de l'huile dans la deuxième étape.

4. Procédé selon une ou plusieurs des revendications 1 à 3, caractérisé en ce qu'on met en oeuvre l'inversion de phase à une température de 10-15°C en utilisant des refrigérants tubulaires à couches minces et des mélangeurs.
